# EUROPEAN PATENT SPECIFICATION

(11) **EP 4 396 890 B1**
(45) Date of publication and mention of the grant of the patent: **23.07.2025**
(21) Application number: 23805850.7
(22) Date of filing: 26.10.2023
(51) Int. Cl.: H01M 10/658, H01M 10/613, H01M 50/207, H01M 50/224, H01M 50/291, H01M 50/293, H01M 10/6551

(54) **THERMAL INSULATION AND CONDUCTION STRUCTURE AND METHOD**
STRUKTUR UND VERFAHREN ZUR WÄRMEDÄMMUNG UND -LEITUNG
STRUCTURE ET PROCÉDÉ D'ISOLATION THERMIQUE ET DE CONDUCTION

(30) Priority: 17.11.2022 US 202263426306 P
(43) Date of publication of application: 10.07.2024
(73) Proprietor: Aspen Aerogels, Inc., Northborough MA 01532 (US)
(72) Inventor: WILLIAMS, John, Northborough, Massachusetts 01532 (US); WANG, Lixin, Northborough, Massachusetts 01532 (US)
(74) Representative: Forresters IP LLP
(86) International application number: PCT/US2023/036006
(87) International publication number: WO 2024/107321

(56) References cited:
- CN-A- 106 025 126
- CN-A- 115 295 946
- CN-U- 213 212 323
- DE-A1- 102020 101 018

## Description

### Claim of Priority

This patent application claims the benefit of priority to U.S. Provisional Patent Application Serial No. 63/426,306, entitled "BATTERY THERMAL ISOLATION AND CONDUCTION STRUCTURE AND METHOD," filed on November 17, 2022.

### Technical Field

The present disclosure relates generally to materials and systems and methods for preventing or mitigating thermal events, such as thermal runaway issues, in energy storage systems. In particular, the present disclosure provides thermal barrier materials. The present disclosure further relates to a battery module or pack with one or more battery cells that includes the thermal barrier materials, as well as systems including those battery modules or packs. Examples described generally may include aerogel materials.

### Background

Lithium-ion batteries (LIBs) are widely used in powering portable electronic devices such as cell phones, tablets, laptops, power tools and other high-current devices such as electric vehicles because of their high working voltage, low memory effects, and high energy density compared to traditional batteries. However, safety is a concern as LIBs are susceptible to catastrophic failure under "abuse conditions" such as when a rechargeable battery is overcharged (being charged beyond the designed voltage), over-discharged, operated at or exposed to high temperature and high pressure.
To prevent cascading thermal runaway events from occurring, there is a need for effective insulation and heat dissipation strategies to address these and other technical challenges of LIBs.

### Brief Description of the Drawings

FIG. 1 shows a battery system in accordance with some example aspects.
FIG. 2 shows a side view of a battery module in accordance with some example aspects.
FIG. 3 shows another battery module in accordance with some example aspects.
FIG. 4 shows another battery module in accordance with some example aspects.
FIG. 5A shows a battery module in accordance with some example aspects.
FIG. 5B shows a battery module in accordance with some example aspects.
FIG. 5C shows a battery module in accordance with some example aspects.
FIG. 6 shows another battery module in accordance with some example aspects.
FIG. 7A shows another battery module in accordance with some example aspects.
FIG. 7B shows another battery module in accordance with some example aspects.
FIG. 8 shows another battery module in accordance with some example aspects.
FIG. 9 shows a portion of a separator in accordance with some example aspects.
FIG. 10 shows another portion of a separator in accordance with some example aspects.
FIG. 11 shows an electronic device in accordance with some example aspects.
FIG. 12 shows an electric vehicle in accordance with some example aspects.

### Description of Aspects

The following description and the drawings sufficiently illustrate specific aspects to enable those skilled in the art to practice them. Other aspects may incorporate structural, logical, electrical, process, and other changes. Portions and features of some aspects may be included in, or substituted for, those of other aspects.

Insulation materials, as described in examples below, can be used as a single heat resistant layer, or in combination with other layers that provide additional function to a multilayer configuration, such as mechanical strength, compressibility, heat dissipation/conduction, etc. Insulation layers described herein are responsible for reliably containing and controlling heat flow from heat-generating parts in small spaces and to provide safety and prevention of fire propagation for such products in the fields of electronic, industrial and automotive technologies.

In many aspects of the present disclosure, the insulation layer functions as a flame/fire deflector layer either by itself or in combination with other materials that enhance performance of containing and controlling heat flow. For example, the insulation layer may itself be resistant to flame and/or hot gases and further include entrained particulate materials that modify or enhance heat containment and control.

### Thermal Barrier Insulation Materials

One example of a highly effective insulation layer includes an aerogel. Aerogels describe a class of material based upon their structure, namely low density, open cell structures, large surface areas (often 900 m²/g or higher) and subnanometer scale pore sizes. The pores may be filled with gases such as air. Aerogels can be distinguished from other porous materials by their physical and structural properties. Although an aerogel material is an exemplary insulation material, the invention is not so limited. Other thermal insulation material layers may also be used in examples of the present disclosure.

Selected examples of aerogel formation and properties are described. In several examples, a precursor material is gelled to form a network of pores that are filled with solvent. The solvent is then extracted, leaving behind a porous matrix. A variety of different aerogel compositions are known, and they may be inorganic, organic and inorganic/organic hybrid. Inorganic aerogels are generally based upon metal alkoxides and include materials such as silica, zirconia, alumina, and other oxides. Organic aerogels include, but are not limited to, urethane aerogels, resorcinol formaldehyde aerogels, and polyimide aerogels.

Inorganic aerogels may be formed from metal oxide or metal alkoxide materials. The metal oxide or metal alkoxide materials may be based on oxides or alkoxides of any metal that can form oxides. Such metals include, but are not limited to silicon, aluminum, titanium, zirconium, hafnium, yttrium, vanadium, cerium, and the like. Inorganic silica aerogels are traditionally made via the hydrolysis and condensation of silica-based alkoxides (such as tetraethoxylsilane), or via gelation of silicic acid or water glass. Other relevant inorganic precursor materials for silica based aerogel synthesis include, but are not limited to metal silicates such as sodium silicate or potassium silicate, alkoxysilanes, partially hydrolyzed alkoxysilanes, tetraethoxylsilane (TEOS), partially hydrolyzed TEOS, condensed polymers of TEOS, tetramethoxylsilane (TMOS), partially hydrolyzed TMOS, condensed polymers of TMOS, tetra-n-propoxysilane, partially hydrolyzed and/or condensed polymers of tetra-n-propoxysilane, polyethylsilicates, partially hydrolyzed polyethysilicates, monomeric alkylalkoxy silanes, bis-trialkoxy alkyl or aryl silanes, polyhedral silsesquioxanes, or combinations thereof.

In certain aspects of the present disclosure, pre-hydrolyzed TEOS, such as Silbond H-5 (SBH5, Silbond Corp), which is hydrolyzed with a water/silica ratio of about 1.9-2, may be used as commercially available or may be further hydrolyzed prior to incorporation into the gelling process. Partially hydrolyzed TEOS or TMOS, such as polyethysilicate (Silbond 40) or polymethylsilicate may also be used as commercially available or may be further hydrolyzed prior to incorporation into the gelling process.

Inorganic aerogels can also include gel precursors comprising at least one hydrophobic group, such as alkyl metal alkoxides, cycloalkyl metal alkoxides, and aryl metal alkoxides, which can impart or improve certain properties in the gel such as stability and hydrophobicity. Inorganic silica aerogels can specifically include hydrophobic precursors such as alkylsilanes or arylsilanes. Hydrophobic gel precursors may be used as primary precursor materials to form the framework of a gel material. However, hydrophobic gel precursors are more commonly used as co-precursors in combination with simple metal alkoxides in the formation of amalgam aerogels. Hydrophobic inorganic precursor materials for silica based aerogel synthesis include, but are not limited to trimethyl methoxysilane (TMS), dimethyl dimethoxysilane (DMS), methyl trimethoxysilane (MTMS), trimethyl ethoxysilane, dimethyl diethoxysilane (DMDS), methyl triethoxysilane (MTES), ethyl triethoxysilane (ETES), diethyl diethoxysilane, dimethyl diethoxysilane (DMDES), ethyl triethoxysilane, propyl trimethoxysilane, propyl triethoxysilane, phenyl trimethoxysilane, phenyl triethoxysilane (PhTES), hexamethyldisilazane and hexaethyldisilazane, and the like. Any derivatives of any of the above precursors may be used and specifically certain polymeric of other chemical groups may be added or cross-linked to one or more of the above precursors.

Organic aerogels are generally formed from carbon-based polymeric precursors. Such polymeric materials include, but are not limited to resorcinol formaldehydes (RF), polyimide, polyacrylate, polymethyl methacrylate, acrylate oligomers, polyoxyalkylene, polyurethane, polyphenol, polybutadiane, trialkoxysilyl-terminated polydimethylsiloxane, polystyrene, polyacrylonitrile, polyfurfural, melamine-formaldehyde, cresol formaldehyde, phenol-furfural, polyether, polyol, polyisocyanate, polyhydroxybenze, polyvinyl alcohol dialdehyde, polycyanurates, polyacrylamides, various epoxies, agar, agarose, chitosan, and combinations thereof. As one example, organic RF aerogels are typically made from the sol-gel polymerization of resorcinol or melamine with formaldehyde under alkaline conditions.

Organic/inorganic hybrid aerogels are mainly comprised of (organically modified silica ("ormosil") aerogels These ormosil materials include organic components that are covalently bonded to a silica network. Ormosils are typically formed through the hydrolysis and condensation of organically modified silanes, R--Si(OX)₃, with traditional alkoxide precursors, Y(OX)₄. In these formulas, X may represent, for example, CH₃, C₂H₅, C₃H₇, C₄H₉; Y may represent, for example, Si, Ti, Zr, or Al; and R may be any organic fragment such as methyl, ethyl, propyl, butyl, isopropyl, methacrylate, acrylate, vinyl, epoxide, and the like. The organic components in ormosil aerogel may also be dispersed throughout or chemically bonded to the silica network.

Aerogels can be formed from flexible gel precursors. Various flexible layers, including flexible fiber-reinforced aerogels, can be readily combined and shaped to give pre-forms that when mechanically compressed along one or more axes, give compressively strong bodies along any of those axes.

One method of aerogel formation includes batch casting. Batch casting includes catalyzing one entire volume of sol to induce gelation simultaneously throughout that volume. Gel-forming techniques include adjusting the pH and/or temperature of a dilute metal oxide sol to a point where gelation occurs. Suitable materials for forming inorganic aerogels include oxides of most of the metals that can form oxides, such as silicon, aluminum, titanium, zirconium, hafnium, yttrium, vanadium, and the like. Particularly preferred are gels formed primarily from alcohol solutions of hydrolyzed silicate esters due to their ready availability and low cost (alcogel). Organic aerogels can also be made from melamine formaldehydes, resorcinol formaldehydes, and the like.

As noted above, an aerogel may be organic, inorganic, or a mixture thereof. In some examples, the aerogel includes a silica-based aerogel. One or more layers in a thermal barrier may include a reinforcement material. The reinforcing material may be any material that provides resilience, conformability, or structural stability to the aerogel material. Examples of reinforcing materials include, but are not limited to, open-cell macroporous framework reinforcement materials, closed-cell macroporous framework reinforcement materials, open-cell membranes, honeycomb reinforcement materials, polymeric reinforcement materials, and fiber reinforcement materials such as discrete fibers, woven materials, non-woven materials, needled nonwovens, battings, webs, mats, and felts.

The reinforcement material can be selected from organic polymer-based fibers, inorganic fibers, carbon-based fibers or a combination thereof. The inorganic fibers are selected from glass fibers, rock fibers, metal fibers, boron fibers, ceramic fibers, basalt fibers, or combination thereof. In some examples, the reinforcement material can include a reinforcement including a plurality of layers of material.

### Overview of Carrier Frame Structures

In some aspects, structures described herein provide numerous benefits to the assembly and operation of battery packs. In some aspects, the use of a carrier frame, as described below, can provide a dimensionally consistent and durable frame to contain battery cells, particularly pouch cells which have a flexible outer structure that contains the electrochemically active materials. This type of structure enables modem manufacturing techniques and also enables precision in the dimensions of the battery pack and its components. In some aspects, the carrier frame itself, a central separator therein, and/or other structures improve the operation and safety of battery backs by providing effective thermal management. As used herein, thermal management may include one or more of cooling (e.g., via conductive, convection, forced or passive cooling) and insulation.

In some aspects, in addition to thermal insulating layers, thermally conductive layers in combination with thermal insulating layers are effective at channeling unwanted heat to a desired external location, such as external heat dissipating fins, a heat dissipating housing, or other external structure to dissipate unwanted heat to outside ambient air. In one example, a thermally conductive layer or layers helps to dissipate heat away from a localized heat load within a battery module or pack. Examples of high thermal conductivity materials include carbon fiber, graphite, silicon carbide, metals including but not limited to copper, stainless steel, aluminum, and the like, as well as combinations thereof.

To aid in the distribution and removal of heat by, in at least one aspect the thermally conductive layer is coupled to a heat sink. It will be appreciated that there are a variety of heat sink types and configurations, as well as different techniques for coupling the heat sink to the thermally conductive layer, and that the present disclosure is not limited to the use of any one type of heat sink/coupling technique. For example, at least one thermally conductive layer of the multilayer materials disclosed herein can be in thermal communication with an element of a cooling system of a battery module or pack, such as a cooling plate or cooling channel of the cooling system. For another example, at least one thermally conductive layer of the multilayer materials disclosed herein can be in thermal communication with other elements of the battery pack, battery module, or battery system that can function as a heat sink, such as the walls of the pack, module or system, or with other ones of the multilayer materials disposed between battery cells. Thermal communication between the thermally conductive layer of the multilayer materials and heat sink elements within the battery system can allow for removal of excess heat from the cell or cells adjacent to the multilayer material to the heat sink, thereby reducing the effect, severity, or propagation of a thermal event that may generate excess heat.

### Illustrations and Aspects of Carrier Frame Structures

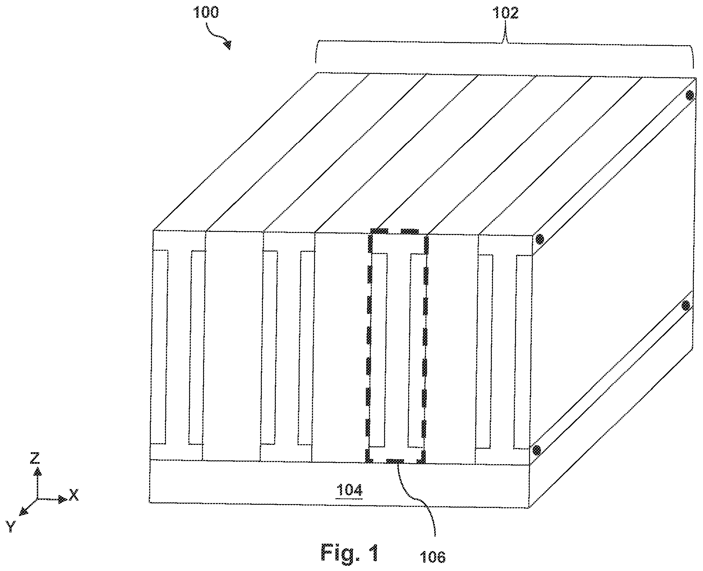

Figure 1 shows one example of a battery system 100. The system 100 includes one or more battery modules 102. In the example of Figure 1, each module includes a carrier frame and two batteries as indicated by the dashed square 106. A heat sink 104 is shown located on a side of the system 100, and in thermal communication with the battery modules 102.

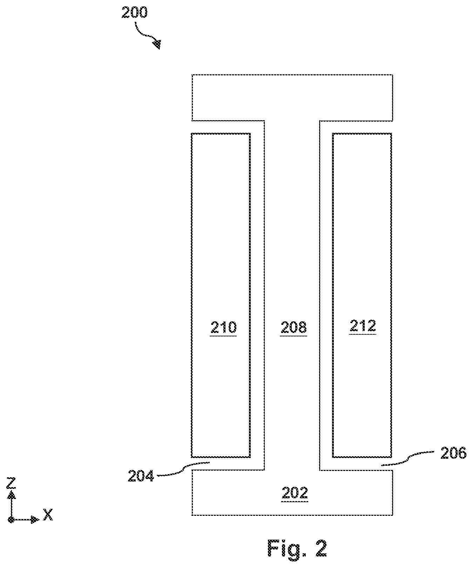

Figure 2 shows a cross section of a portion of a battery module 200 similar to battery module 102 in the dashed square 106 of Figure 1. The battery module 200 includes a carrier frame 202, a central separator 208, a first battery 210, a second battery 212 are shown.

In some aspects, the carrier frame 202 in some aspects, provides physical containment for pouch cells, which have a flexible outer surface. The flexible outer surface of the pouch cell, absent a containing structure, presents assembly challenges that overcome by the aspects described herein.

The carrier frame 202 may also provide additional benefits, such as managing the thermal conditions within a battery pack. These include preventing one cell from heating other cells in a module, and also providing conduction pathways to remove excess heat generated by the batteries, among other benefits described below.

In some aspects, the carrier frame 202 includes a first cavity 204 and a second cavity 206. The first cavity 204 and the second cavity 206 may be disposed on opposite sides of the central separator 208 in some aspects. In this way, the first cavity 204 and the second cavity 206 may be configured and dimensioned (e.g., based on the dimensions of the central separator 208 and other features of the carrier frame 202) to receive the first battery 210 and the second battery 212.

In some aspects, the first battery 210 and the second battery 212 are shown located at least partially within the a first cavity 204 and the second cavity 206. In one example, the batteries 210, 210 are lithium ion pouch cells, although the invention is not so limited. While lithium ion pouch cells are frequently used in electric vehicle battery modules, other examples of batteries that may be held by the carrier frame 202 (e.g., via dimensioning and configuring the structure defining first cavity 204 and the second cavity 206) include prismatic cells, cylindrical cells, among others.

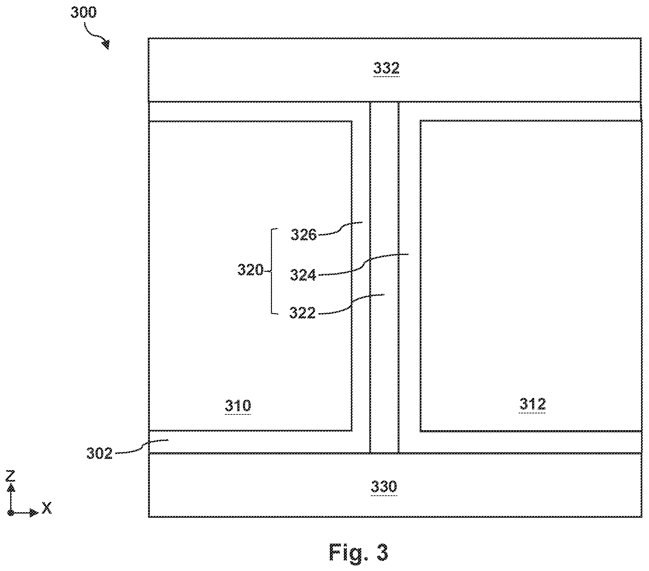

Figure 3 shows a battery module 300 similar to similar to battery module 102 from Figure 1. The module 300 includes a carrier frame 302, a first cell 310 in corresponding first cavity, a second cell 312 in a corresponding second cavity, a central separator 320, a thermal insulation layer 322, a first metal plate 324, a second metal plate 326, a first heat sink 330, and a second heat sink 332.

At a high level, the battery module 300 employs conductive materials (e.g., metals, graphite) as the carrier frame 302. Conductive materials may also be used within some components of the central separator 320, and heat sinks 330, 332 to conduct heat away from cells 310, 312 and into the heat sinks 330, 332. The inclusion of the thermal insulation layer 322 provides a level of safety in the event of a thermal runaway in one or more of the cells 310, 312 by reducing heat transfer between adjacent cells. At the same time, thermal conduction from the opposing metal plates 324 and 326 and the carrier frame 302 help to cool the cells 310, 312. In this way, the central separator 320 provides both cooling to improve battery performance, and safety from the thermal insulation layer 322.

As described above, the carrier frame 302 and the central separator 320 are dimensioned and configured to define the first cavity and the second cavity, both of which are occupied by corresponding first and second cells 310, 312 in Figure 3. The description of the carrier frame, the central separator, and the first and second cavities, and other features, presented above are equally applicable to their corresponding features in the module 300.

In some aspects, the first cell 310 and the second cell 312 are disposed within the first cavity and the second cavity, respectively, as described above.

In some aspects, the central separator 320 functions as a heat sink and a heat transfer barrier, thereby conducting heat away from hot spots within a cell and preventing the undesired transfer of heat from one cell to another. By one or both of these mechanisms, the central separator 320 prevents thermal events from spreading from one cell to another cell. In some aspects, the central separator 320 may have sufficient mechanical integrity to resist (for 30 seconds, for 1 minute, for 5 minutes) the degrading effects of ejecta from a cell (e.g., cell 310, 312) in thermal runaway, thereby preventing the ejecta from damaging and/or igniting an adjacent cell.

In one aspect, the central separator 320 of the module 300 is a multi-component structure. Aspects in which a central separator 320 are fabricated from multiple layers may accomplish multiple design goals more efficiently than single-layer configurations. For example, because the central separator 320 includes a thermal insulation layer 322 disposed between opposing metal plates 324 and 326, the central separator 320 may prevent the undesired transfer of heat between cells, facilitate the conductive transfer of heat from one or more cells to a heat sink, and provided added protection to cells from the damaging exposure to ejecta from an adjacent cell experiencing thermal runaway.

In some aspects, the thermal insulation layer 322 has a low thermal conductivity (e.g., on the order of 40 milliWatts/meter-Kelvin) to prevent undesired heat transfer between adjacent cells. In some aspects, the thermal insulation layer 322 may be fabricated from an aerogel material and/or a reinforced aerogel material. Other thermal insulation materials are also within the scope of the invention including, but not limited to ceramic (woven and/or non-woven) fiber materials, polymeric materials (e.g., oxidized polyacrylonitrile (O-PAN), (woven and/or non-woven) glass fibers, among others.

In some aspects, the opposing metal plates 324 and 326 may be fabricated from a known thermal conductor. In some aspects, the opposing metal plates 324, 326 may have a thermal conductivity of at least 50 Watts/meter-Kelvin. In some aspects, the opposing metal plates 324, 326 may be fabricated from metals, including but not aluminum, copper, steel, or any other known thermal conductor. In some aspects, the opposing metal plates 324 and 326 may include graphite plates, graphite or carbon coated metal plates, polymer plates filled with metallic or conductive particles and/or metallic or conductive fibers, or other analogous composite materials.

As indicated above, one aspect of the metal plates 324, 326 is to conduct heat from the cells. In some aspects, the first heat sink 330 and the second heat sink 332 are shown in thermal contact with the carrier frame 302, and more specifically, metal plates 324, 326 of the central separator 320. In this way, the heat generated within the cells 310, 312 may be transferred to one or more heat sinks 330, 332, thereby reducing the likelihood of thermal runaway within one or more of the cells 310, 312.

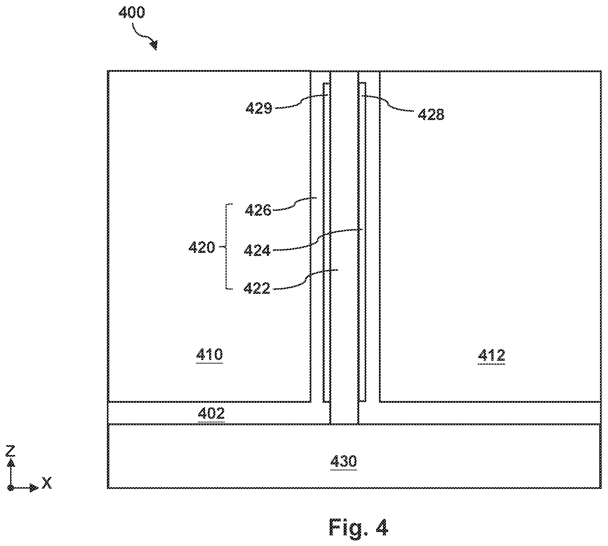

Figure 4 shows a battery system 400 similar to battery system 100 of Figure 1 and similar to battery module 300 of Figure 3. As with one or both of these previously described examples, the system 400 includes a first cell 410, a second cell 412, a carrier frame 402, and a central separator 420, and a heat sink 430.

Analogous to the previously described example, the system 400 includes a first cavity and a second opposing cavity similar to aspects described above. As with Figure 3, both of these cavities are occupied by corresponding cells 410, 412 and are not visible in the view presented by Figure 4.

In some aspects, any of the modules described herein may include a single heat sink, as is illustrated in Figure 4. The single heat sink 430 is in thermal communication with an "L" shaped metal plates 424, 426 that provide a conduction pathway that removes heat generated by cells 410, 412.

In some aspects, any of the modules described herein may alter the insulative characteristics of the central separator 420 by including one or more air gaps 428, 429 adjacent to the thermal insulation layer 422, as is shown in Figure 4. In this configuration (any one or more aspects of which may be combined with any other module described herein), the central separator 420 thus includes an insulation layer 422, with opposing major surfaces at least partially exposed by a corresponding air gap 428, 429. The air gaps 428, 429 are at least partially defined by the insulation layer 422 on one side and a portion of the "L-shaped" metal plates 424, 426 on another side.

In one aspect, the central separator 420 is part of (i.e., integral with, attached to, mounted on) the carrier frame 402. The carrier frame 402 may be an assembly of the metal plate 424, 426 and optionally the central separator 420. The central separator 420 in Figure 4 includes a thermal insulation layer 422 included between opposing metal plates 424 and 426. The preceding descriptions of the materials used to fabricate the thermal insulation layer and the metal plates are equally applicable to the analogous elements in Figure 4 .

The central separator 420 further includes one or more air gaps 428, 429 between the thermal insulation layer 422 and the opposing metal plates 424 and 426. The inclusion of one or more air gaps 428, 429 provides increased thermal isolation between the first cell 410 and the second cell 412, while still providing thermal conduction through the opposing metal plates 424 and 426 and the carrier frame 402 to a heat sink 430. In this way, the configuration of the central separator 420 shown in Figure 4 (and therefore the system 400 as a whole) may provide added thermal isolation between adjacent cells, thereby reducing heat transfer between adjacent cells and therefore reducing the risk of thermal runaway from one cell causing thermal runaway in an adjacent cell.

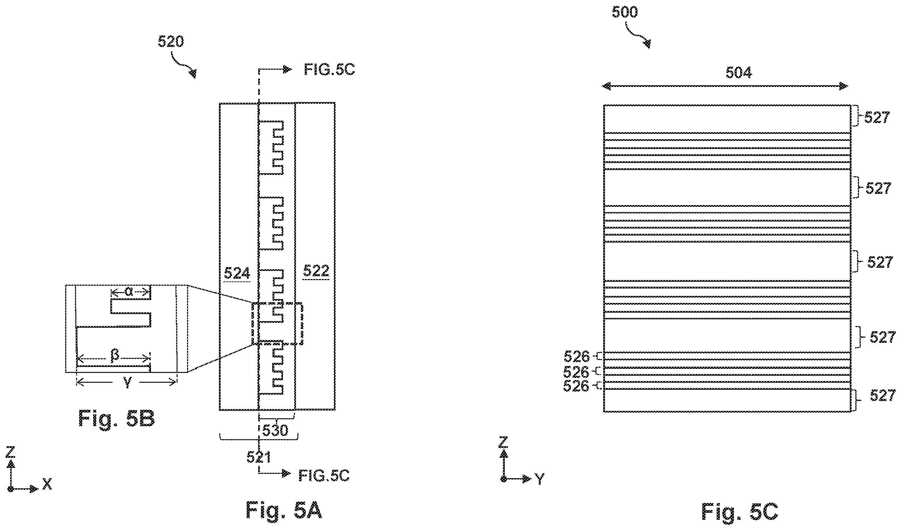

Figure 5A shows a side view of a portion of a battery module 520 similar to the previously described battery modules. The module 520 includes a battery 522, and a central separator 521, first fins 526, second fins 527. The central separator 521 is composed of (at least in part) a thermal insulator 524, and a conductor plate 530.

One of ordinary skill in the art, having the benefit of the present disclosure, will recognize that the central separator 521 may be included between two batteries in a module as shown in Figures 3 and 4, although the invention is not so limited. In one example, the thermal insulation 422 includes an aerogel material. Other thermal insulation materials are also within the scope of the invention.

In one example, one or more fins 526 are included with the conductor plate 530. In some aspects, the one or more fins 526 are integral with the conductor plate 530, whether formed from the conductor plate itself 530 or formed separately and later mounted on the conductor plate 530. Regardless of the continuity and/or connection between the conductor plate 530 and the one or more fins 526, these two components are associated with one another so that thermal energy ("heat") may be transferred from the from one to the other.

In one example, the fins 526 are part of a regular textured pattern. In one example, the fins 526 are part of an irregular textured pattern. For example, as illustrated in Figure 5B, a second fin 527 is a different size and shape from fin 526, as indicated by respective dimensions (e.g., fin height) β and α. In one aspect, β is greater than α. In one aspect, each of β and α are less than a thickness γ of the conductor plate 530.

Figure 5C further shows a top view 500 of the conductor plate 530 and fins 526, 527. In the example of Figure 5C, the textured pattern includes a lengthwise orientation indicated by arrows 504 that preferentially conducts heat towards a heat sink such as the heat sinks described in Figures 3 and 4 when in operation. In one example, the lengthwise orientation is perpendicular to the largest surface of the heat sink. In one example, coolant as a liquid or gas such as air may be used to flow through the fins 526 to provide additional cooling capacity. In one example, the conductor plate 530 and textured pattern are concentrated or only located over known hot spots on batteries in a module. In one example, the textured pattern is anisotropic, and concentrates heat removal from known hot spots on batteries in a module. In other examples, the conductor plate 530 and textured pattern cover an entire surface adjacent to a battery in a module.

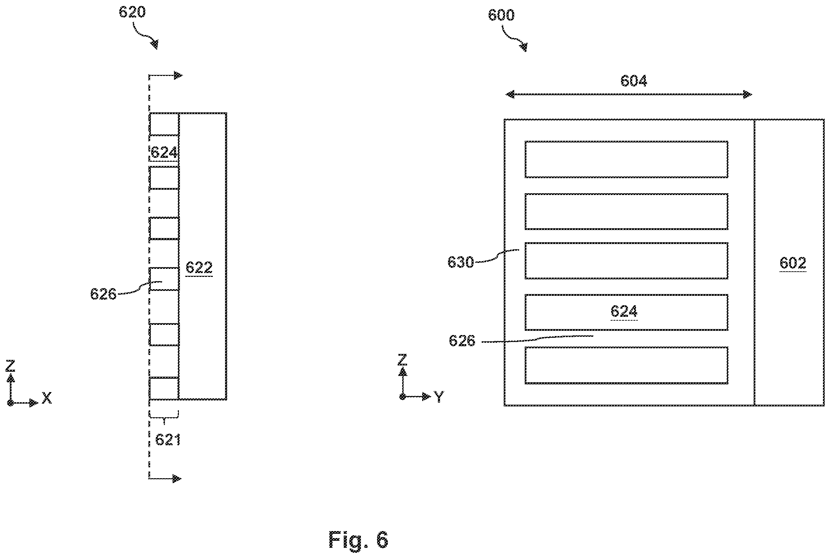

Figure 6 shows a side view of a portion of a battery module 620. The module 620 includes a battery 622 and a central separator 621. One of ordinary skill in the art, having the benefit of the present disclosure, will recognize that the central separator 621 may be included between two batteries in a module as shown in Figures 3, 4, and 5A although the invention is not so limited. The central separator 621 includes a conductor plate 630 having textured pattern. In the example of Figure 6, the textured pattern includes fins 626 and gaps 624.

Figure 6 further shows a plan view 600 of the conductor plate 630 and fins 626. The conductor plate 630 is shown in thermal communication with a heat sink 602. In the example of Figure 6, the textured pattern includes a lengthwise orientation indicated by arrows 604 that preferentially conducts heat towards the heat sink 602 when in operation.

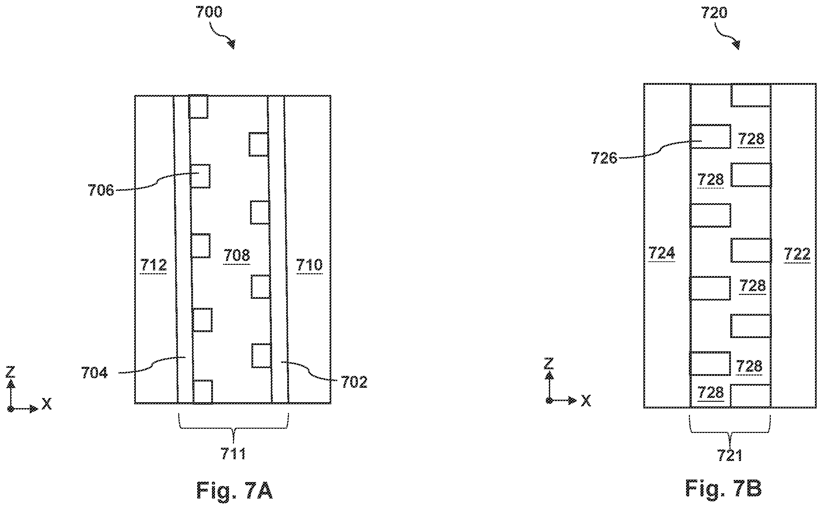

Figure 7A shows a battery module 700 similar to similar to battery module 102 from Figure 1. The module 700 includes a first battery 710 and a second battery 712. A central separator 711 is shown between the first battery 710 and the second battery 712. In one example, the central separator 711 may be used as part of a carrier frame similar to other examples described. The central separator 711 includes opposing metal plates 702, 704 with a thermal insulation layer 708 between the opposing metal plates 702, 704. In one example, the thermal insulation 708 includes an aerogel material. Other thermal insulation materials are also within the scope of the invention. A number of fins 706 are shows as part of a textured pattern on the opposing metal plates 702, 704. The fins 706 may be oriented as described in examples above to preferentially conducts heat towards a heat sink such as the heat sinks described in Figures 3 and 4 when in operation.

The fins 706 in Figure 7A are offset with one another to provide greater compression range of the thermal insulation layer without contact between the textured patterns. In operation, batteries 712, 712 may expand, and require space to expand into. In one example, the thermal insulation layer 708 is resilient and can compress and expand as needed while the opposing metal plates 702, 704 flex to accommodate the expansion and contraction. The offset of the fins allows added expansion and contraction while still providing conducts heat towards a heat sink as described.

Figure 7B shows a battery module 720 similar to similar to battery module 102 from Figure 1. The module 720 includes a first battery 722 and a second battery 724. A central separator 721 is shown between the first battery 722 and the second battery 724. In one example, the central separator 721 may be used as part of a carrier frame similar to other examples described.

In the Example of Figure 7B, opposing metal plates are omitted and only a number of fins 726 are used to conduct heat towards a heat sink when in operation. A thermal insulation 728 is shown between the textured pattern of the fins 726. In one example, the thermal insulation 708 includes an aerogel material. Other thermal insulation materials are also within the scope of the invention. As shown in Figures 7A, 7B and 5A, 5B, 5C, in selected examples, a thermal insulation conforms to the textured pattern. Similar to the example of Figure7A, in Figure 7B, the fins 726 are offset with one another to provide greater compression range of the thermal insulation layer without contact between the textured patterns.

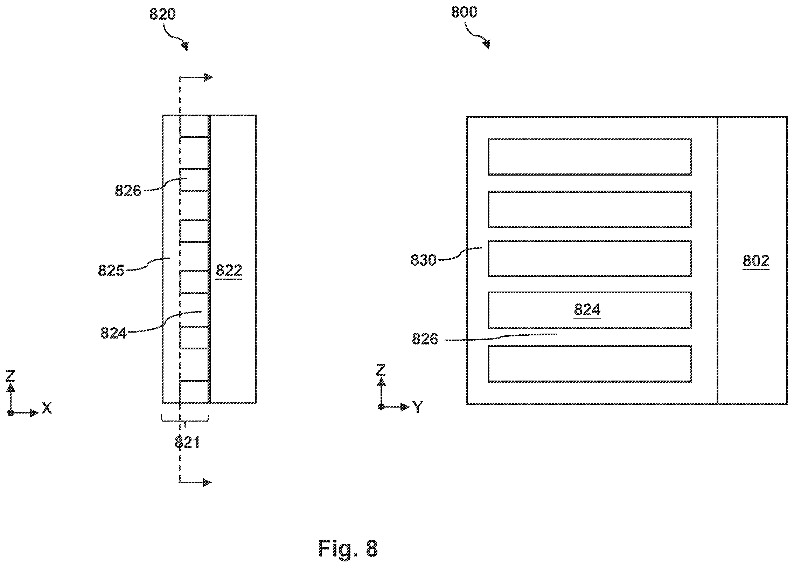

Figure 8 shows a side view of a portion of a battery module 820 similar to battery module 102 from Figure 1. The module 820 includes a battery 822 and a central separator 821. One of ordinary skill in the art, having the benefit of the present disclosure, will recognize that the central separator 821 may be included between two batteries in a module as shown in other examples, although the invention is not so limited. The central separator 821 includes a conductor plate 830 having textured pattern. In the example of Figure 8, the textured pattern includes fins 826 and gaps 824. In the example of Figure 8, a thermal insulation 825 is shown between the textured pattern of the fins 826. In one example, the thermal insulation 825 includes an aerogel material. Other thermal insulation materials are also within the scope of the invention. The thermal insulation 825 conforms to the textured pattern.

Figure 8 further shows a top view 800 of the conductor plate 830 and fins 826. The conductor plate 830 is shown in thermal communication with a heat sink 802. In the example of Figure 8, the textured pattern includes a lengthwise orientation similar to orientations described in other examples that preferentially conducts heat towards the heat sink 802 when in operation.

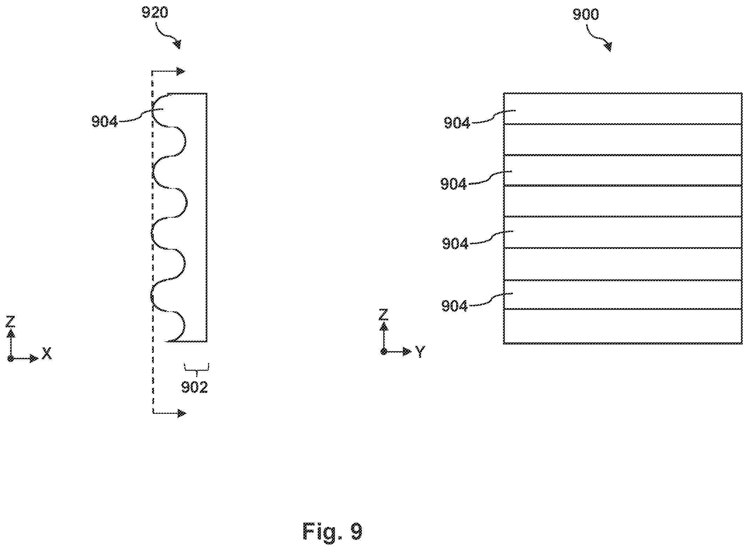

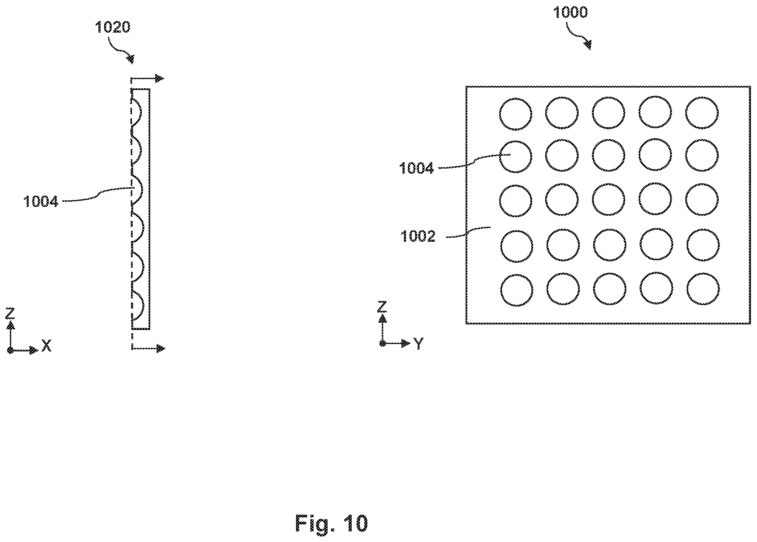

Figures 9 and 10 show other examples of textured patterns that may be used as components of central separators described. Figure 9 shows a side view of a portion of a battery module 920. Figure 9 further shows a top view 900 of a conductor plate 902 with a number of fins 904. In the example of Figure 9, the number of fins 904 include rounded tops. Figure 10 shows a side view of a portion of a battery module 1020. Figure 10 further shows a top view 1000 of a conductor plate 1002 with a number of cavities 1004. In Figure 10, a conductor plate 1002 is shown with a number of cavities 1004 that form a textured pattern. In one example, textured patterns as described provide added expansion and contraction with a central separator to allow for battery expansion and contraction.

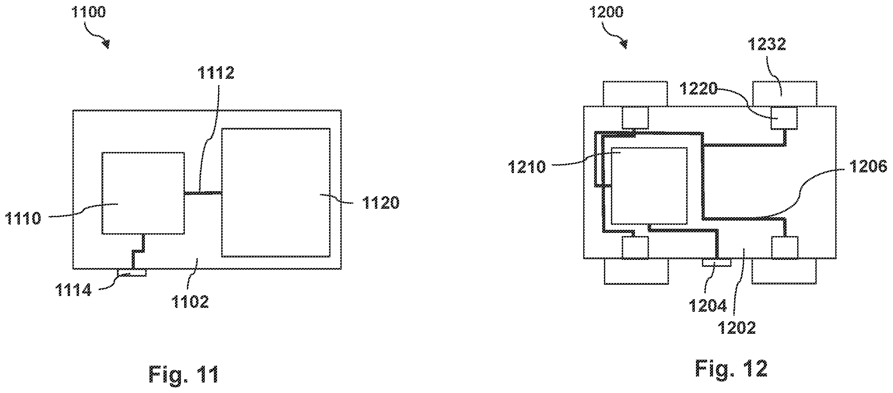

Battery modules as described above are used in a number of electronic devices. Figure 11 illustrates an example electronic device 1100 that includes a battery module 1110. The battery module 1110 is coupled to functional electronics 1120 by circuitry 1112. In the example shown, the battery module 1110 and circuitry 1112 are contained in a housing 1102. A charge port 1114 is shown coupled to the battery module 1110 to facilitate recharging of the battery module 1110 when needed.

In one example, the functional electronics 1120 include devices such as semiconductor devices with transistors and storage circuits. Examples include, but are not limited to, telephones, computers, display screens, navigation systems, etc.

Figure 12 illustrates another electronic system that utilizes battery modules that include multilayer thermal barriers as described above. An electric vehicle 1200 is illustrated in Figure 12. The electric vehicle 1200 includes a chassis 1202 and wheels 1232. In the example shown, each wheel 1232 is coupled to a drive motor 1220. A battery module 1210 is shown coupled to the drive motors 1220 by circuitry 1206. A charge port 1204 is shown coupled to the battery module 1210 to facilitate recharging of the battery module 1210 when needed.

Examples of electric vehicle 1200 include, but are not limited to, consumer vehicles such as cars, trucks, etc. Commercial vehicles such as tractors and semi-trucks are also within the scope of the invention. Although a four wheeled vehicle is shown, the invention is not so limited. For example, two wheeled vehicles such as motorcycles and scooters are also within the scope of the invention.

To better illustrate the method and apparatuses disclosed herein, a non-limiting list of aspects is provided here:
Example 1 includes a battery module. The module includes a carrier frame having a pair of opposing cavities to house batteries, a central separator region between the pair of opposing cavities, and a thermal insulation layer included within the central separator region.
Example 2 includes the battery module of Example 1, wherein the thermal insulation layer includes an aerogel material.
Example 3 includes the battery module of any one of Examples 1-2, wherein the central separator includes opposing metal plates with the thermal insulation layer between the opposing metal plates.
Example 4 includes the battery module of any one of Examples 1-3, wherein the thermal insulation layer is resilient, and wherein the opposing metal plates are flexible.
Example 5 includes the battery module of any one of Examples 1-4, further including an air gap between the thermal insulation layer and the central separator region.
Example 6 includes the battery module of any one of Examples 1-5, wherein the carrier frame and central separator region include metal.
Example 7 includes the battery module of any one of Examples 1-6, wherein the carrier frame and central separator region are an integral metal casting.
Example 8 includes battery module. The module includes a carrier frame having a pair of opposing cavities, a pair of pouch batteries in the pair of opposing cavities, a central separator between the pair of opposing cavities, wherein the central separator includes a textured pattern in one or more opposing major surfaces of the central separator, and a thermal insulation layer included between the pair of opposing cavities.
Example 9 includes the battery module of Example 8, wherein the textured pattern includes fins.
Example 10 includes the battery module of any one of Examples 8-9, wherein the fins include rounded tops.
Example 11 includes the battery module of any one of Examples 8-10, wherein the textured pattern includes an array of circular cavities.
Example 12 includes the battery module of any one of Examples 8-11, wherein the thermal insulation layer conforms to the textured pattern.
Example 13 includes the battery module of any one of Examples 8-12, further including a heat sink in thermal communication with a side of the carrier frame, and wherein the textured pattern includes a lengthwise orientation that preferentially conducts heat towards the heat sink when in operation.
Example 14 includes the battery module of any one of Examples 8-13, wherein the thermal insulation layer includes an aerogel material.
Example 15 includes the battery module of any one of Examples 8-14, wherein the central separator includes opposing metal plates with the thermal insulation layer between the opposing metal plates.
Example 16 includes the battery module of any one of Examples 8-15, wherein the textured pattern is included on interior surfaces of each of the opposing metal plates.
Example 17 includes the battery module of any one of Examples 8-16, wherein the textured pattern on each of the opposing metal plates are offset with one another to provide greater compression range of the thermal insulation layer without contact between the textured patterns.
Example 18 includes the battery module of any one of Examples 8-17, wherein the thermal insulation layer conforms to the textured pattern on each of the opposing metal plates.

The above description is intended to be illustrative, and not restrictive. For example, the above-described examples (or one or more aspects thereof) may be used in combination with each other. Other aspects can be used, such as by one of ordinary skill in the art upon reviewing the above description. The Abstract is provided to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed aspect. Thus, the following claims are hereby incorporated into the Detailed Description, with each claim standing on its own as a separate aspect. The scope of the invention should be determined with reference to the appended claims.

Although an overview of the inventive subject matter has been described with reference to specific example aspects, various modifications and changes may be made to these aspects without departing from the broader scope of aspects of the present disclosure. Such aspects of the inventive subject matter may be referred to herein, individually or collectively, by the term "invention" merely for convenience and without intending to voluntarily limit the scope of this application to any single disclosure or inventive concept if more than one is, in fact, disclosed.

The aspects illustrated herein are described in sufficient detail to enable those skilled in the art to practice the teachings disclosed. Other aspects may be used and derived therefrom, such that structural and logical substitutions and changes may be made without departing from the scope of this disclosure. The Detailed Description, therefore, is not to be taken in a limiting sense, and the scope of various aspects is defined only by the appended claims.

As used herein, the term "or" may be construed in either an inclusive or exclusive sense. Moreover, plural instances may be provided for resources, operations, or structures described herein as a single instance. Additionally, boundaries between various resources, operations, modules, engines, and data stores are somewhat arbitrary, and particular operations are illustrated in a context of specific illustrative configurations. Other allocations of functionality are envisioned and may fall within a scope of various aspects of the present disclosure. In general, structures and functionality presented as separate resources in the example configurations may be implemented as a combined structure or resource. Similarly, structures and functionality presented as a single resource may be implemented as separate resources. These and other variations, modifications, additions, and improvements fall within a scope of aspects of the present disclosure as represented by the appended claims. The specification and drawings are, accordingly, to be regarded in an illustrative rather than a restrictive sense.

The foregoing description, for the purpose of explanation, has been described with reference to specific example aspects. However, the illustrative discussions above are not intended to be exhaustive or to limit the possible example aspects to the precise forms disclosed. Many modifications and variations are possible in view of the above teachings. The example aspects were chosen and described in order to best explain the principles involved and their practical applications, to thereby enable others skilled in the art to best utilize the various example aspects with various modifications as are suited to the particular use contemplated.

It will also be understood that, although the terms "first," "second," and so forth may be used herein to describe various elements, these elements should not be limited by these terms. These terms are only used to distinguish one element from another. For example, a first contact could be termed a second contact, and, similarly, a second contact could be termed a first contact, without departing from the scope of the present example aspects. The first contact and the second contact are both contacts, but they are not the same contact.

The terminology used in the description of the example aspects herein is for the purpose of describing particular example aspects only and is not intended to be limiting. As used in the description of the example aspects and the appended examples, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context.

## Claims

1. A battery module (102, 200, 300, 400, 520, 620, 700, 720, 820, 920, 1020), comprising:
a carrier frame (202, 302, 402) having a pair of opposing cavities (204, 206) to house batteries (210, 212, 310, 312, 410, 412, 522, 622, 710, 712, 722, 724, 822);
a central separator (208, 320, 420, 521, 621, 711, 721, 821) region between the pair of opposing cavities (204, 206); and
a thermal insulation layer (322, 422, 728, 825) included within the central separator (208, 320) region.

2. The battery module (102, 200, 300, 400, 520, 620, 700, 720, 820, 920, 1020) of claim 1, wherein the thermal insulation layer (322, 422, 708, 728, 825) includes an aerogel material.

3. The battery module (102, 200, 300, 400, 520, 620, 700, 720, 820, 920, 1020) of claim 1 or 2, wherein the central separator (208, 320, 420, 521, 621, 711, 721, 821) region includes opposing metal plates (324, 326, 424, 426, 702, 704) with the thermal insulation layer (322, 422, 708) between the opposing metal plates (324, 326, 702, 704).

4. The battery module (102, 200, 300, 400, 520, 620, 700, 720, 820, 920, 1020) of claim 3, wherein the thermal insulation layer (708) is resilient, and wherein the opposing metal plates (324, 326, 702, 704) are flexible.

5. The battery module (102, 200, 300, 400, 520, 620, 700, 720, 820, 920, 1020) of any of claims 1 to 4, further including an air gap (428, 429) between the thermal insulation layer (422) and the central separator (420) region.

6. The battery module (102, 200, 300, 400, 520, 620, 700, 720, 820, 920, 1020) of any of claims 1 to 5, wherein the carrier frame (302, 402) and central separator (320, 420) region include metal.

7. The battery module (102, 200, 300, 400, 520, 620, 700, 720, 820, 920, 1020) of any of claims 1 to 7, wherein the carrier frame (420) and central separator (402) region are an integral metal casting.

8. The battery module (102, 200, 300, 400, 520, 620, 700, 720, 820, 920, 1020) of claim 1, wherein the central separator (521, 821) includes a textured pattern in one or more opposing major surfaces of the central separator.

9. The battery module (102, 200, 300, 400, 520, 620, 700, 720, 820, 920, 1020) of claim 8, wherein the textured pattern includes fins (526, 527, 626, 706, 726, 823, 826, 904),
wherein the fins preferably include rounded tops (904).

10. The battery module (102, 200, 300, 400, 520, 620, 700, 720, 820, 920, 1020) of claims 8 or 9, wherein the textured pattern includes an array of circular cavities.

11. The battery module (102, 200, 300, 400, 520, 620, 700, 720, 820, 920, 1020) of any of claims 8 to 10, wherein the thermal insulation layer (428, 524, 708, 728, 825) conforms to the textured pattern.

12. The battery module (102, 200, 300, 400, 520, 620, 700, 720, 820, 920, 1020) of any of claims 8 to 11, further including a heat sink (330, 332, 430, 602) in thermal communication with a side of the carrier frame (302, 402), and wherein the textured pattern includes a lengthwise orientation that preferentially conducts heat towards the heat sink (602, 802) when in operation.

13. The battery module (102, 200, 300, 400, 520, 620, 700, 720, 820, 920, 1020) of any of claims 8 to 12, wherein the central separator (320, 420, 711, 721) includes opposing metal plates (324, 326, 424, 426, 702, 704) with the thermal insulation layer (322, 422, 708, 728) between the opposing metal plates (324, 326, 424, 426, 702, 704).

14. The battery module (102, 200, 300, 400, 520, 620, 700, 720, 820, 920, 1020) of claim 13, wherein the textured pattern is included on interior surfaces of each of the opposing metal plates.

15. The battery module (102, 200, 300, 400, 520, 620, 700, 720, 820, 920, 1020) of claim 14, wherein the textured pattern on each of the opposing metal plates are offset with one another to provide greater compression range of the thermal insulation layer without contact between the textured patterns, preferably wherein the thermal insulation layer conforms to the textured pattern on each of the opposing metal plates.

## Patentansprüche

1. Batteriemodul (102, 200, 300, 400, 520, 620, 700, 720, 820, 920, 1020), umfassend:
einen Trägerrahmen (202, 302, 402), der ein Paar gegenüberliegender Hohlräume (204, 206) aufweist, um Batterien (210, 212, 310, 312, 410, 412, 522, 622, 710, 712, 722, 724, 822) unterzubringen;
einen zentralen Separator(208, 320, 420, 521, 621, 711, 721, 821)bereich zwischen dem Paar gegenüberliegender Hohlräume (204, 206); und
eine Wärmedämmschicht (322, 422, 728, 825), die innerhalb des zentralen Separator(208, 320)bereichs beinhaltet ist.

2. Batteriemodul (102, 200, 300, 400, 520, 620, 700, 720, 820, 920, 1020) nach Anspruch 1, wobei die Wärmedämmschicht (322, 422, 708, 728, 825) ein Aerogel-Material beinhaltet.

3. Batteriemodul (102, 200, 300, 400, 520, 620, 700, 720, 820, 920, 1020) nach Anspruch 1 oder 2, wobei der zentrale Separator(208, 320, 420, 521, 621, 711, 721, 821)bereich gegenüberliegende Metallplatten (324, 326, 424, 426, 702, 704) mit der Wärmedämmschicht (322, 422, 708) zwischen den gegenüberliegenden Metallplatten (324, 326, 702, 704) beinhaltet.

4. Batteriemodul (102, 200, 300, 400, 520, 620, 700, 720, 820, 920, 1020) nach Anspruch 3, wobei die Wärmedämmschicht (708) nachgiebig ist und wobei die gegenüberliegenden Metallplatten (324, 326, 702, 704) flexibel sind.

5. Batteriemodul (102, 200, 300, 400, 520, 620, 700, 720, 820, 920, 1020) nach einem der Ansprüche 1 bis 4, ferner beinhaltend einen Luftspalt (428, 429) zwischen der Wärmedämmschicht (422) und dem zentralen Separator(420)bereich.

6. Batteriemodul (102, 200, 300, 400, 520, 620, 700, 720, 820, 920, 1020) nach einem der Ansprüche 1 bis 5, wobei der Trägerrahmen (302, 402) und der zentrale Separator(320, 420)bereich Metall beinhalten.

7. Batteriemodul (102, 200, 300, 400, 520, 620, 700, 720, 820, 920, 1020) nach einem der Ansprüche 1 bis 7, wobei der Trägerrahmen (420) und der zentrale Separator(402)bereich ein integraler Metallguss sind.

8. Batteriemodul (102, 200, 300, 400, 520, 620, 700, 720, 820, 920, 1020) nach Anspruch 1, wobei der zentrale Separator (521, 821) ein strukturiertes Muster in einer oder mehreren gegenüberliegenden Hauptflächen des zentralen Separators beinhaltet.

9. Batteriemodul (102, 200, 300, 400, 520, 620, 700, 720, 820, 920, 1020) nach Anspruch 8, wobei das strukturierte Muster Rippen (526, 527, 626, 706, 726, 823, 826, 904) beinhaltet, wobei die Rippen bevorzugt abgerundete Oberseiten (904) beinhalten.

10. Batteriemodul (102, 200, 300, 400, 520, 620, 700, 720, 820, 920, 1020) nach Anspruch 8 oder 9, wobei das strukturierte Muster eine Anordnung kreisförmiger Hohlräume beinhaltet.

11. Batteriemodul (102, 200, 300, 400, 520, 620, 700, 720, 820, 920, 1020) nach einem der Ansprüche 8 bis 10, wobei die Wärmedämmschicht (428, 524, 708, 728, 825) dem strukturierten Muster entspricht.

12. Batteriemodul (102, 200, 300, 400, 520, 620, 700, 720, 820, 920, 1020) nach einem der Ansprüche 8 bis 11, ferner beinhaltend einen Kühlkörper (330, 332, 430, 602) in thermischer Verbindung mit einer Seite des Trägerrahmens (302, 402) und
wobei das strukturierte Muster eine Längsausrichtung beinhaltet, die, wenn sie in Betrieb ist, die Wärme bevorzugt in Richtung des Kühlkörpers (602, 802) leitet.

13. Batteriemodul (102, 200, 300, 400, 520, 620, 700, 720, 820, 920, 1020) nach einem der Ansprüche 8 bis 12, wobei der zentrale Separator (320, 420, 711, 721) gegenüberliegende Metallplatten (324, 326, 424, 426, 702, 704) mit der Wärmedämmschicht (322, 422, 708, 728) zwischen den gegenüberliegenden Metallplatten (324, 326, 424, 426, 702, 704) beinhaltet.

14. Batteriemodul (102, 200, 300, 400, 520, 620, 700, 720, 820, 920, 1020) nach Anspruch 13, wobei das strukturierte Muster auf Innenflächen jeder der gegenüberliegenden Metallplatten beinhaltet ist.

15. Batteriemodul (102, 200, 300, 400, 520, 620, 700, 720, 820, 920, 1020) nach Anspruch 14, wobei das strukturierte Muster auf jeder der gegenüberliegenden Metallplatten gegeneinander versetzt sind, um einen größeren Kompressionsbereich der Wärmedämmschicht ohne Kontakt zwischen den strukturierten Mustern bereitzustellen, wobei die Wärmedämmschicht bevorzugt dem strukturierten Muster auf jeder der gegenüberliegenden Metallplatten entspricht.

## Revendications

1. Module de batterie (102, 200, 300, 400, 520, 620, 700, 720, 820, 920, 1020), comprenant :
un cadre porteur (202, 302, 402) ayant une paire de cavités opposées (204, 206) pour loger des batteries (210, 212, 310, 312, 410, 412, 522, 622, 710, 712, 722, 724, 822) ;
une région du séparateur central (208, 320, 420, 521, 621, 711, 721, 821) entre la paire de cavités opposées (204, 206) ; et
une couche d'isolation thermique (322, 422, 728, 825) incluse au sein de la région du séparateur central (208, 320).

2. Module de batterie (102, 200, 300, 400, 520, 620, 700, 720, 820, 920, 1020) selon la revendication 1, dans lequel la couche d'isolation thermique (322, 422, 708, 728, 825) comporte un matériau aérogel.

3. Module de batterie (102, 200, 300, 400, 520, 620, 700, 720, 820, 920, 1020) selon la revendication 1 ou 2, dans lequel la région du séparateur central (208, 320, 420, 521, 621, 711, 721, 821) comporte des plaques métalliques opposées (324, 326, 424, 426, 702, 704) avec la couche d'isolation thermique (322, 422, 708) entre les plaques métalliques opposées (324, 326, 702, 704).

4. Module de batterie (102, 200, 300, 400, 520, 620, 700, 720, 820, 920, 1020) selon la revendication 3, dans lequel la couche d'isolation thermique (708) est résiliente, et dans lequel les plaques métalliques opposées (324, 326, 702, 704) sont flexibles.

5. Module de batterie (102, 200, 300, 400, 520, 620, 700, 720, 820, 920, 1020) selon l'une quelconque des revendications 1 à 4, comportant également un entrefer (428, 429) entre la couche d'isolation thermique (422) et la région du séparateur central (420).

6. Module de batterie (102, 200, 300, 400, 520, 620, 700, 720, 820, 920, 1020) selon l'une quelconque des revendications 1 à 5, dans lequel le cadre porteur (302, 402) et la région du séparateur central (320, 420) comportent du métal.

7. Module de batterie (102, 200, 300, 400, 520, 620, 700, 720, 820, 920, 1020) selon l'une quelconque des revendications 1 à 7, dans lequel le cadre porteur (402) et la région du séparateur central (420) forment une pièce moulée métallique monobloc.

8. Module de batterie (102, 200, 300, 400, 520, 620, 700, 720, 820, 920, 1020) selon la revendication 1, dans lequel le séparateur central (521, 821) comporte un motif texturé dans une ou plusieurs surfaces principales opposées du séparateur central.

9. Module de batterie (102, 200, 300, 400, 520, 620, 700, 720, 820, 920, 1020) selon la revendication 8, dans lequel le motif texturé comporte des ailettes (526, 527, 626, 706, 726, 823, 826, 904),
dans lequel les ailettes comportent de préférence des sommets arrondis (904).

10. Module de batterie (102, 200, 300, 400, 520, 620, 700, 720, 820, 920, 1020) selon les revendications 8 ou 9, dans lequel le motif texturé comporte un réseau de cavités circulaires.

11. Module de batterie (102, 200, 300, 400, 520, 620, 700, 720, 820, 920, 1020) selon l'une quelconque des revendications 8 à 10, dans lequel la couche d'isolation thermique (428, 524, 708, 728, 825) est conforme au motif texturé.

12. Module de batterie (102, 200, 300, 400, 520, 620, 700, 720, 820, 920, 1020) selon l'une quelconque des revendications 8 à 11, comportant également un dissipateur thermique (330, 332, 430, 602) en communication thermique avec un côté du cadre porteur (302, 402), et
dans lequel le motif texturé comporte une orientation longitudinale qui conduit préférentiellement la chaleur vers le dissipateur thermique (602, 802) lors du fonctionnement.

13. Module de batterie (102, 200, 300, 400, 520, 620, 700, 720, 820, 920, 1020) selon l'une quelconque des revendications 8 à 12, dans lequel la région du séparateur central (320, 420, 711, 721) comporte des plaques métalliques opposées (324, 326, 424, 426, 702, 704) avec la couche d'isolation thermique (322, 422, 708, 728) entre les plaques métalliques opposées (324, 326, 424, 426, 702, 704).

14. Module de batterie (102, 200, 300, 400, 520, 620, 700, 720, 820, 920, 1020) selon la revendication 13, dans lequel le motif texturé est inclus sur des surfaces internes de chacune des plaques métalliques opposées.

15. Module de batterie (102, 200, 300, 400, 520, 620, 700, 720, 820, 920, 1020) selon la revendication 14, dans lequel les motifs texturés sur chacune des plaques métalliques opposées sont décalés les uns par rapport aux autres pour fournir une plus grande plage de compression de la couche d'isolation thermique sans contact entre les motifs texturés, de préférence dans lequel la couche d'isolation thermique est conforme aux motifs texturés sur chacune des plaques métalliques opposées.
